# EUROPEAN PATENT APPLICATION

(11) **EP 4 848 802 A1**
(43) Date of publication of application: **02.12.2026**
(21) Application number: 25751349.9
(22) Date of filing: 24.01.2025
(51) Int. Cl.: H04W 28/04

(54) **COMMUNICATION METHOD AND APPARATUS**

(30) Priority: 07.02.2024 CN 202410175953
(71) Applicant: Huawei Technologies Co., Ltd., Shenzhen, Guangdong 518129 (CN)
(72) Inventor: ZANG, Xin, Shenzhen, Guangdong 518129 (CN); MA, Jingwang, Shenzhen, Guangdong 518129 (CN)
(74) Representative: Huawei European IPR
(86) International application number: PCT/CN2025/074787
(87) International publication number: WO 2025/167747

(57) **Abstract**

Embodiments of this application provide a communication method and apparatus. In the method, when an access network device receives a PDU set-based quality of service parameter configured by an SMF network element, the SMF network element determines, based on a quality of service handling capability of the access network device for a PDU set and a handling capability of a terminal for a PDU set, whether the PDU set-based quality of service parameter configured by the SMF network element is supported; and the access network device reports the information indicating support or non-support to the SMF network element, thereby enabling PDU set-based uplink transmission.

## Description

### CROSS-REFERENCE TO RELATED APPLICATIONS

This application claims priority to Chinese Patent Application No. 202410175953.5, filed with the China National Intellectual Property Administration on February 7, 2024 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

The development of 5th generation (5th generation, 5G) mobile communication systems have driven exponential growth in media services. Video services have become a mainstream media form, with emerging multimedia services such as 4K and 8K ultra-high-definition video and extended reality (extended reality, XR). The emerging multimedia services pose great challenges to network transmission bandwidth, requiring improved network transmission efficiency to meet network requirements of fast service evolution.

In a data stream transmission process, the concept of a protocol data unit (protocol data unit, PDU) set (set) has been introduced. A PDU set may include one or more PDU data packets, and each PDU data packet may carry an application layer payload, such as a video frame or a video slice. Transmission of the PDU set requires enhanced capabilities of communication devices. A key research direction is how an access network device determines whether a corresponding terminal supports scheduling and transmission of PDU sets.

### SUMMARY

Embodiments of this application provide a communication method and apparatus, to enable an access network device to determine whether a PDU set-based quality of service parameter configured by a core network element is supported, or determine whether PDU set-based quality of service handling configured by a core network element can be met or supported.

According to a first aspect, a communication method is provided. The communication method may be applied to PDU set-based uplink transmission. The method may be performed by a first communication apparatus. For example, the first communication apparatus may be an access network device, or a module (for example, a chip or a circuit) in the access network device, or all or a part of logical nodes, logical modules, or software (for example, a CU, a DU, or an RU) that implement a function of the access network device. The method includes: receiving first configuration information from a session management function network element, where the first configuration information includes a protocol data unit PDU set-based quality of service parameter of a first quality of service flow; and optionally, the first configuration information may further include a quality of service flow-based legacy quality of service parameter (legacy QoS parameter); determining first indication information based on a quality of service handling capability of the access network device for a PDU set and a handling capability of a terminal for a PDU set; and sending the first indication information to the session management function network element, where the first indication information indicates support or non-support for the PDU set-based quality of service parameter of the first quality of service flow configured by the session management function network element, or the first indication information indicates whether creation of the first quality of service flow is supported, or the first indication information indicates whether PDU set-based quality of service handling is supported, for example, whether PDU set-based quality of service handling configured by a core network element is supported. In the following descriptions of the first aspect, an example in which "the first indication information indicates support or non-support for the PDU set-based quality of service parameter of the first quality of service flow configured by the session management function network element" is used for description.

In the foregoing design, when the access network device receives the PDU set-based quality of service parameter configured by the session management function network element, the access network device determines, based on the quality of service handling capability of the access network device for the PDU set and the handling capability of the terminal for the PDU set, whether the PDU set-based quality of service parameter configured by the session management function network element is supported, and the access network device sends the information indicating support or non-support to the session management function network element, so that the core network element can determine whether required uplink PDU set transmission can be implemented.

In a possible design, when the access network device supports PDU set-based quality of service handling, and the terminal supports handling of the PDU set, the first indication information indicates the support for the PDU set-based quality of service parameter of the first quality of service flow configured by the session management function network element; or when the access network device does not support PDU set-based quality of service handling, and/or the terminal does not support handling of the PDU set, the first indication information indicates the non-support for the PDU set-based quality of service parameter of the first quality of service flow configured by the session management function network element.

In a possible design, the handling capability of the terminal for the PDU set includes a capability of the terminal to identify the PDU set and/or a capability of the terminal to discard packets based on the PDU set.

In a possible design, determining the first indication information based on the PDU set-based quality of service handling capability of the access network device and the handling capability of the terminal for the PDU set includes: determining the first indication information based on the capability of the terminal to identify the PDU set and/or the capability of the terminal to discard packets based on the PDU set and the quality of service handling capability of the access network device for the PDU set.

In a possible design, when the terminal does not support identification of the PDU set, the first indication information indicates the non-support for the PDU set-based quality of service parameter of the first quality of service flow configured by the session management function network element.

In a possible design, when the terminal supports identification of the PDU set, and the terminal supports packet discard of the PDU set, the first indication information indicates the support for the PDU set-based quality of service parameter of the first quality of service flow configured by the session management function network element.

In a possible design, determining the first indication information based on the quality of service handling capability of the access network device for the PDU set and the handling capability of the terminal for the PDU set includes: determining the first indication information based on the quality of service handling capability of the access network device for the PDU set, the handling capability of the terminal for the PDU set, and the PDU set-based quality of service parameter of the first quality of service flow.

In a possible design, the capability of the terminal to discard packets based on the PDU set includes at least one of the following: a capability of the terminal to discard packets based on PDU set integrity, a capability of the terminal to discard packets based on PDU set importance, a capability of the terminal to discard packets based on forward error correction FEC of the PDU set, or a capability of the terminal to discard packets based on error concealment of the PDU set.

In a possible design, the method further includes: receiving second indication information from the terminal, where the second indication information indicates the handling capability of the terminal for the PDU set.

In a possible design, when the first indication information indicates the non-support for the PDU set-based quality of service parameter of the first quality of service flow configured by the session management function network element, the method further includes: sending third indication information to the session management function network element, where the third indication information indicates a reason for the non-support for the PDU set-based quality of service parameter of the first quality of service flow configured by the session management function network element.

In a possible design, when the first indication information indicates the non-support for the PDU set-based quality of service parameter of the first quality of service flow configured by the session management function network element, the method further includes: receiving second configuration information from the session management function network element, where the second configuration information includes an updated quality of service parameter of the first quality of service flow. In a possible design, the updated quality of service parameter of the first quality of service flow includes a quality of service flow-based legacy quality of service parameter (legacy QoS parameter) and/or the PDU set-based quality of service parameter. If the updated quality of service parameter of the first quality of service flow includes a PDU set-based legacy quality of service parameter, the updated PDU set-based quality of service parameter may be different from a previously sent PDU set-based quality of service parameter.

In a possible design, when the first indication information indicates the support for the PDU set-based quality of service parameter of the first quality of service flow configured by the session management function network element, the method further includes: sending third configuration information to the terminal, where the third configuration information is used to configure, for the terminal, a timer for packet discard based on the PDU set.

A second aspect is a peer side corresponding to the first aspect. For beneficial effects, refer to the descriptions of the first aspect. A communication method is provided. The method is applied to PDU set-based uplink transmission. The method is performed by a second communication apparatus. The second communication apparatus may be a session management function network element or a module (for example, a chip or a circuit) in the session management function network element. The method includes: sending first configuration information to an access network device, where the first configuration information includes a protocol data unit PDU set-based quality of service parameter of a first quality of service flow; and receiving first indication information from the access network device, where the first indication information indicates support or non-support for the PDU set-based quality of service parameter of the first quality of service flow configured or sent by a session management function network element, or the first indication information indicates whether creation of the first quality of service flow is supported, or the first indication information indicates whether PDU set-based quality of service handling is supported, for example, whether PDU set-based quality of service handling configured by a core network element is supported. In the following descriptions of the second aspect, an example in which "the first indication information indicates support or non-support for the PDU set-based quality of service parameter of the first quality of service flow configured by the session management function network element" is used for description.

In a possible design, when the access network device supports PDU set-based quality of service handling, and the terminal supports handling of the PDU set, the first indication information indicates the support for the PDU set-based quality of service parameter of the first quality of service flow configured by the session management function network element; or when the access network device does not support quality of service handling of the PDU set, and/or the terminal does not support handling of the PDU set, the first indication information indicates the non-support for the PDU set-based quality of service parameter of the first quality of service flow configured by the session management function network element.

In a possible design, the handling capability of the terminal for the PDU set includes a capability of the terminal to identify the PDU set and/or a capability of the terminal to discard packets based on the PDU set.

In a possible design, that the first indication information is determined based on the quality of service handling capability of the access network device for the PDU set and the handling capability of the terminal for the PDU set includes: The first indication information is determined based on the capability of the terminal to identify the PDU set and/or the capability of the terminal to discard packets based on the PDU set and the quality of service handling capability of the access network device for the PDU set.

In a possible design, when the terminal does not support identification of the PDU set, the first indication information indicates the non-support for the PDU set-based quality of service parameter of the first quality of service flow configured by the session management function network element.

In a possible design, when the terminal supports identification of the PDU set, and the terminal supports packet discard of the PDU set, the first indication information indicates the support for the PDU set-based quality of service parameter of the first quality of service flow configured by the session management function network element.

In a possible design, that the first indication information is determined based on the quality of service handling capability of the access network device for the PDU set and the handling capability of the terminal for the PDU set includes: The first indication information is determined based on the quality of service handling capability of the access network device for the PDU set, the handling capability of the terminal for the PDU set, and the PDU set-based quality of service parameter of the first quality of service flow.

In a possible design, the capability of the terminal to discard packets based on the PDU set includes at least one of the following: a capability of the terminal to discard packets based on PDU set integrity, a capability of the terminal to discard packets based on PDU set importance, a capability of the terminal to discard packets based on forward error correction FEC of the PDU set, or a capability of the terminal to discard packets based on error concealment of the PDU set.

In a possible design, when the first indication information indicates the non-support for the PDU set-based quality of service parameter of the first quality of service flow configured by the session management function network element, the method further includes: receiving third indication information from the access network device, where the third indication information indicates a reason for the non-support for the PDU set-based quality of service parameter of the first quality of service flow configured by the session management function network element.

In a possible design, when the first indication information indicates the non-support for the PDU set-based quality of service parameter of the first quality of service flow configured by the session management function network element, the method further includes: sending second configuration information to the access network device, where the second configuration information includes an updated quality of service parameter of the first quality of service flow. For example, when the first indication information indicates the non-support for the PDU set-based quality of service parameter of the first quality of service flow configured by the session management function network element, the session management function network element sends an updated quality of service rule and/or protocol description information to the terminal.

According to a third aspect, a communication method is provided. The method is applied to PDU set-based uplink transmission. The method is performed by a third communication apparatus. The third communication apparatus may be a terminal or a module (for example, a chip or a circuit) in the terminal. The method includes: determining second indication information; and sending the second indication information to an access network device, where the second indication information indicates a handling capability of the terminal for a protocol data unit PDU set.

In the foregoing design, the terminal may send the PDU set-based handling capability of the terminal to the access network device, so that when receiving a PDU set-based quality of service parameter sent or configured by a session management function network element, the access network device determines, based on a PDU set-based handling capability sent by the terminal, whether the PDU set-based quality of service parameter configured or sent by the session management function network element is supported, to implement PDU set-based uplink transmission of the terminal.

In a possible design, the handling capability of the terminal for the PDU set includes a capability of the terminal to identify the PDU set and/or a capability of the terminal to discard packets based on the PDU set.

In a possible design, the capability of the terminal to discard packets based on the PDU set includes at least one of the following: a capability of the terminal to discard packets based on PDU set integrity, a capability of the terminal to discard packets based on PDU set importance, a capability of the terminal to discard packets based on forward error correction FEC of the PDU set, or a capability of the terminal to discard packets based on error concealment of the PDU set.

In a possible design, the method further includes: receiving third configuration information from the access network device, where the third configuration information is used to configure, for the terminal, a timer for packet discard based on the PDU set.

According to a fourth aspect, an apparatus is provided. The apparatus can implement the method in the first aspect. For example, the apparatus includes a corresponding means (means) for performing the first aspect. The apparatus may be implemented by hardware, implemented by software, or implemented by hardware executing corresponding software.

In a possible design, the apparatus includes a unit for implementing the first aspect.

In a possible design, the apparatus includes a processor, and the processor is configured to perform the method in the first aspect.

In a possible design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method in the first aspect through a logic circuit or by executing code instructions.

In a possible design, the apparatus includes a processor and a memory. The processor is configured to execute a computer program or instructions stored in the memory, to cause the apparatus to implement the method in the first aspect.

Optionally, the apparatus may be a first communication apparatus, or may be a module or a unit (for example, a chip, a chip system, or a circuit) that is in one-to-one correspondence with the method/operation/step/action described in the first aspect in the first communication apparatus, or may be used in cooperation with the first communication apparatus.

According to a fifth aspect, an apparatus is provided. The apparatus can implement the method in the second aspect. For example, the apparatus includes a corresponding means (means) for performing the second aspect. The apparatus may be implemented by hardware, implemented by software, or implemented by hardware executing corresponding software.

In a possible design, the apparatus includes a unit for implementing the second aspect.

In a possible design, the apparatus includes a processor, and the processor is configured to perform the method in the second aspect.

In a possible design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method in the second aspect through a logic circuit or by executing code instructions.

In a possible design, the apparatus includes a processor and a memory. The processor is configured to execute a computer program or instructions stored in the memory, to cause the apparatus to implement the method in the second aspect.

Optionally, the apparatus may be a second communication apparatus, or may be a module or a unit (for example, a chip, a chip system, or a circuit) that is in one-to-one correspondence with the method/operation/step/action described in the second aspect in the second communication apparatus, or may be used in cooperation with the second communication apparatus.

According to a sixth aspect, an apparatus is provided. The apparatus can implement the method in the third aspect. For example, the apparatus includes a corresponding means (means) for performing the third aspect. The apparatus may be implemented by hardware, implemented by software, or implemented by hardware executing corresponding software.

In a possible design, the apparatus includes a unit for implementing the third aspect.

In a possible design, the apparatus includes a processor, and the processor is configured to perform the method in the third aspect.

In a possible design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method in the third aspect through a logic circuit or by executing code instructions.

In a possible design, the apparatus includes a processor and a memory. The processor is configured to execute a computer program or instructions stored in the memory, to cause the apparatus to implement the method in the third aspect.

Optionally, the apparatus may be a third communication apparatus, or may be a module or a unit (for example, a chip, a chip system, or a circuit) that is in one-to-one correspondence with the method/operation/step/action described in the third aspect in the third communication apparatus, or may be used in cooperation with the third communication apparatus.

According to a seventh aspect, a computer-readable storage medium is provided, storing a computer program or instructions. When the computer program or the instructions are run on a computer, the computer is caused to implement the method in any one of the first aspect to the third aspect.

According to an eighth aspect, a computer program product is provided, and includes a computer program or instructions. When the computer program or the instructions are run by a computer, the method in any one of the first aspect to the third aspect is performed.

According to a ninth aspect, a chip is provided, including a processor, configured to execute a computer program or instructions stored in a memory, to cause the chip to implement the method in any one of the first aspect to the third aspect. Optionally, the processor is coupled to the memory.

According to a tenth aspect, a communication system is provided. The communication system includes a first communication apparatus and a second communication apparatus. The first communication apparatus is configured to implement the method in the first aspect, and the second communication apparatus is configured to implement the method in the second aspect. Optionally, the communication system further includes a third communication apparatus, and the third communication apparatus is configured to perform the method in the third aspect.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is another schematic flowchart of a communication method according to an embodiment of this application;
FIG. 4 is a diagram of a structure of an apparatus according to an embodiment of this application; and
FIG. 5 is a diagram of another structure of an apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method, a function description, and the like in a method embodiment may also be applied to an apparatus embodiment or a system embodiment.

Various numbers and terms such as "first" and "second" in embodiments of this application are merely used for differentiation for ease of description, but are not intended to limit the scope of embodiments of this application. Serial numbers of the foregoing processes do not mean an execution sequence, and the execution sequence of the processes needs to be determined based on functions and internal logic of the processes.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. A character "/" usually indicates an "or" relationship between associated objects. "Including at least one of A, B, or C" may indicate: including A; including B; including C; including A and B; including A and C; including B and C; and including A, B, and C.

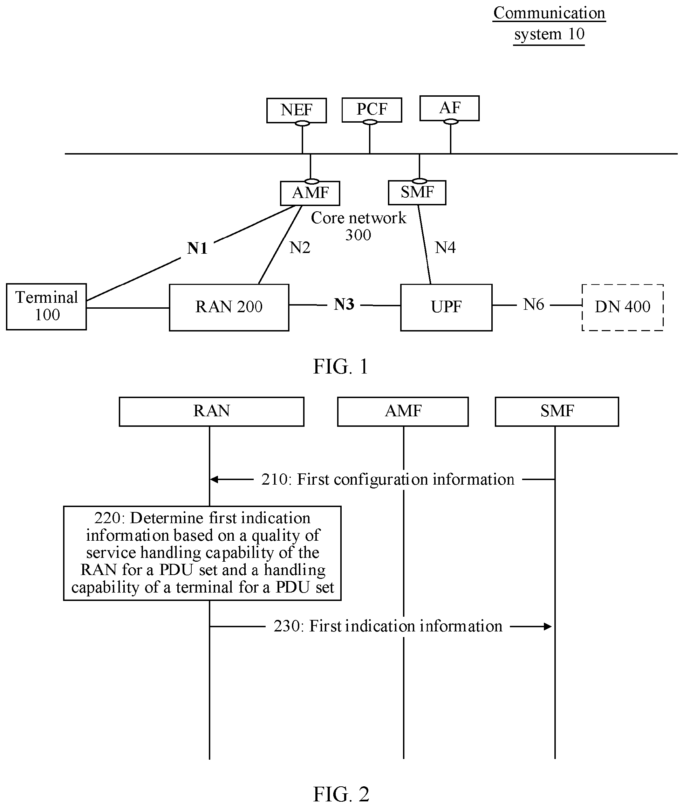

FIG. 1 is a diagram of a possible and non-limiting system. As shown in FIG. 1, a communication system 10 includes a terminal 100, a radio access network (radio access network, RAN) 200 and a core network (core network, CN) 300.

The terminal 100 may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, and a smart city. The terminal may be a mobile phone, a head-mounted display device, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The RAN 200 includes at least one RAN node. The terminal 100 may be connected to the RAN node in a wireless manner. The RAN node is connected to the core network 300 in a wireless or wired manner. A core network device in the core network 300 and the RAN node in the RAN 200 may be different physical devices, or may be a same physical device that integrates a core network device logical function and a radio access device logical function.

The RAN 200 may be a cellular system related to a 3rd generation partnership project (3rd generation partnership project, 3GPP), for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 200 may alternatively be an open access network (open RAN, O-RAN, or ORAN), a cloud radio access network (cloud radio access network, CRAN), or a wireless fidelity (wireless fidelity, Wi-Fi) system. The RAN 200 may alternatively be a communication system that integrates two or more of the foregoing systems.

In a possible scenario, the RAN node may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a 6G mobile communication system, a base station in a future mobile communication system, an access node in a Wi-Fi system, or the like. The RAN node may be a macro base station, a micro base station or an indoor base station, a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in embodiments of this application may alternatively be implemented by using a software function running on hardware, or may be implemented by using a virtualization function instantiated on a platform (for example, a cloud platform). The RAN node in embodiments of this application may alternatively be a logical node, a logical module, or software that can implement all or a part of functions of the RAN node.

In another possible scenario, a plurality of RAN nodes collaborate to assist the terminal in implementing radio access, and different RAN nodes respectively implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The RAN node may also be sometimes referred to as an access network device, a RAN entity, an access node, or the like, and constitutes a part of the communication system, to help the terminal implement radio access. In subsequent descriptions of this application, unless otherwise specified, "RAN" is used for description. The plurality of RAN nodes in the RAN 200 may be nodes of a same type, or may be nodes of different types. In a service-oriented architecture of the access network, the "access network device" may alternatively be replaced with an access network function (access network function, ANF) network element.

The core network 300 includes an access and mobility management function (access and mobility management function, AMF) network element, a session management function (session management function, SMF) network element, a user plane function (user plane function, UPF) network element, a policy control function (policy control function, PCF) network element, a network exposure function (network exposure function, NEF) network element, an application function (application function, AF) network element, and the like.

Optionally, the communication system 10 further includes a DN 400. The terminal, the access network device, the UPF network element, and the DN may be usually referred to as user plane functions and entities. A data flow of a user may be transmitted by using a protocol data unit (protocol data unit, PDU) session established between the terminal and the DN. One PDU session includes one or more quality of service (quality of service, QoS) flows. A user plane is used to carry service data. Some other network elements in the communication system 10, such as the SMF network element and the AMF network element, may be referred to as control plane functions and entities, and are mainly responsible for functions such as authentication and authorization, registration management, session management, mobility management, and policy control, to implement reliable and stable transmission of a user plane data flow. A control plane is used to carry signaling messages.

In embodiments of this application, the terminal and the AMF network element may interact with each other through an N1 interface, and a message exchanged between the terminal and the AMF network element may be referred to as an N1 message (message). Similarly, an interface between the access network device and the AMF network element and an interface between the access network device and the UPF network element are respectively an N2 interface and an N3 interface, and a message exchanged between the access network device and the AMF network element and a message exchanged between the access network device and the UPF network element may be respectively referred to as an N2 message and an N3 message. An interface between the UPF network element and the SMF network element is an N4 interface, and an interface between the UPF network element and the DN is an N6 interface. A message exchanged between the UPF network element and the SMF network element and a message exchanged between the UPF network element and the DN may be respectively referred to as an N4 message and an N6 message; and the like.

It may be understood that names of network elements in the core network 300 are not limited. For example, in a 5G communication system, a network element implementing a signaling handling part is referred to as an AMF network element. In a 6G communication system, a network element that implements the foregoing function may alternatively be referred to as another name. This is not limited. In subsequent descriptions, names of network elements in 5G are mainly used as an example to describe the solutions in embodiments of this application. Optionally, the core network 300 may further include other network elements of the control plane functions and entities, for example, a management data analytics function (management data analytics function, MDAF) network element and a unified data management (unified data management, UDM) network element.

It may be understood that the terminal, the access network device, the network element in the core network, and the like may be referred to as communication apparatuses. For example, the access network device may be understood as a communication apparatus having a base station function, the terminal may be understood as a communication apparatus having a terminal function, and the network element in the core network may be understood as an apparatus having a core network element function. For example, the SMF may be understood as a communication apparatus having an SMF function.

The concept of a protocol data unit (protocol data unit, PDU) set (set) is proposed in 3GPP Release 18 (Release 18, R18). One PDU set includes one or more PDU data packets, and the one or more PDU data packets carry application layer loads, for example, video frames or video slices. In 3GPP R18, PDU set-based downlink transmission is mainly discussed. In PDU set-based uplink transmission, the SMF network element may configure a PDU set-based quality of service (quality of service, QoS) parameter for the RAN, and the RAN may perform PDU set-based uplink transmission based on the PDU set-based quality of service parameter configured by the SMF network element. In the PDU set-based uplink transmission, not only a quality of service handling capability of the RAN for a PDU set needs to be considered, but also a handling capability of the terminal for a PDU set needs to be considered. A key research direction is how the RAN determines, based on the foregoing two capabilities, whether the quality of service parameter configured or sent by an SM network element is supported.

In view of the foregoing, an embodiment of this application provides a communication method. In the method, when a RAN receives a PDU set-based quality of service parameter sent by an SMF network element, the RAN determines, based on a quality of service handling capability of the RAN for a PDU set and a handling capability of a terminal for a PDU set, whether the PDU set-based quality of service parameter sent by the SMF network element is supported; and the RAN sends the information indicating support or non-support to the SMF network element.

In descriptions of embodiments of this application, the following communication terms are used. For ease of understanding and description, the following communication terms are described.

PDU set: The PDU set includes one or more PDU data packets. Optionally, the PDU data packet may be replaced with a PDU, a data packet, or the like. In the following descriptions, the PDU data packet is used as an example for description. The one or more PDU data packets included in the PDU set correspond to a same protocol. For example, for uplink transmission, an upper layer (for example, an application layer) of the terminal may generate a PDU set, and one or more PDU data packets corresponding to the PDU set correspond to a same protocol. For example, the protocol may be a real-time transport protocol (real-time transport protocol, RTP). If the terminal has a capability to identify the PDU set, a transport layer of the terminal may determine, based on a protocol description (protocol description) of the PDU set, specific PDU data packets that are sent by the upper layer and that belong to one PDU set, so that uplink transmission is performed between the terminal and the RAN based on the PDU set. The one or more PDU data packets included in the PDU set are transmitted in one quality of service flow.

Quality of service flow: The quality of service flow corresponds to an attribute file, and the attribute file may be referred to as a profile (profile). The attribute file includes at least one PDU set quality of service parameter (PDU Set QoS parameter). For example, the PDU set quality of service parameter may be a PDU set delay budget (PDU set delay budget, PSDB), a PDU set error rate (PDU Set error rate, PSER), PDU set integrated handling information (PDU set integrated handling information, PSIHI), or the like. It may be understood that the attribute file may further include another quality of service parameter, for example, a quality of service flow identifier (QoS flow indicator, QFI) or another parameter. This is not limited. In the following descriptions, an example in which the attribute file of the quality of service flow is a profile of the quality of service flow (QoS profile) is used for description.

FIG. 2 is a schematic flowchart according to an embodiment of this application, and includes the following steps.

Step 210: An SMF network element sends first configuration information to a RAN, and the RAN receives the first configuration information from the SMF network element.

The first configuration information includes a PDU set-based quality of service parameter of a first quality of service flow. Optionally, the PDU set-based quality of service parameter of the first quality of service flow may be referred to as a quality of service parameter of a PDU set for short. The quality of service parameter of the PDU set is the quality of service parameter of the first quality of service flow, and the quality of service parameter indicates a parameter requirement for performing transmission in a unit of the PDU set. In the following descriptions, descriptions of the PDU set-based quality of service parameter of the first quality of service flow and the quality of service parameter of the PDU set are not distinguished from each other, and may be replaced with each other.

Step 220: The RAN determines first indication information based on a quality of service handling capability of the RAN for a PDU set and a handling capability of a terminal for a PDU set.

The first indication information indicates support or non-support for the PDU set-based quality of service parameter of the first quality of service flow configured or sent by the SMF network element, or the first indication information indicates whether creation of the first quality of service flow is supported, or the first indication information indicates whether PDU set-based quality of service handling is supported, for example, whether PDU set-based quality of service handling configured by a core network element is supported. In the following descriptions, an example in which "the first indication information indicates support or non-support for the PDU set-based quality of service parameter of the first quality of service flow configured by the SMF network element" is used for description.

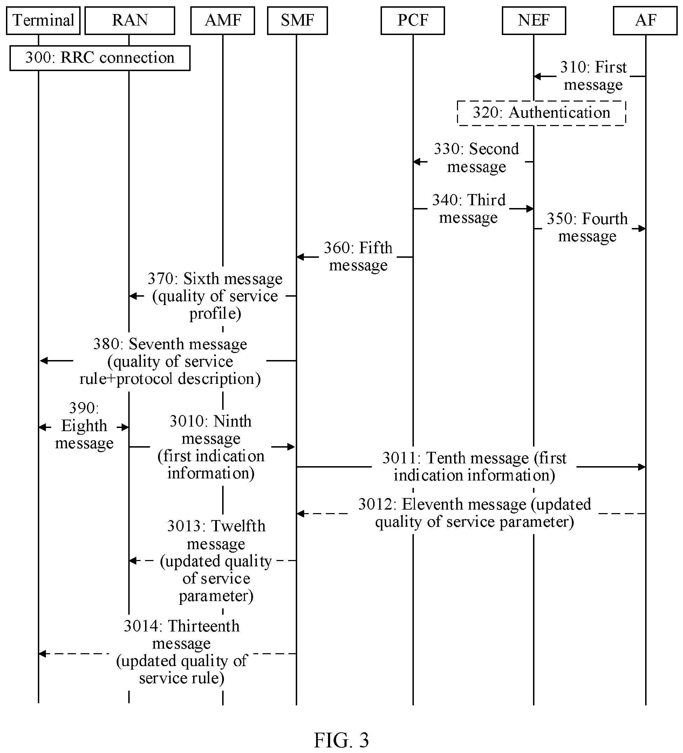

In a possible implementation, the first indication information may be implemented by using one bit. For example, when a value of the first indication information is a first value (for example, "1"), the first indication information indicates the support for the PDU set-based quality of service parameter of the first quality of service flow configured by the SMF network element. Alternatively, when a value of the first indication information is a second value (for example, "0"), the first indication information indicates the non-support for the PDU set-based quality of service parameter of the first quality of service flow configured by the SMF network element. For a process in which the RAN determines the first indication information, refer to descriptions in the procedure in FIG. 3.

Step 230: The RAN sends the first indication information to the SMF network element, and the SMF network element receives the first indication information from the RAN.

In a possible implementation, when the first indication information reported by the RAN indicates the non-support for the PDU set-based quality of service parameter of the first quality of service flow configured by the SMF network element, the SMF network element may further update a first quality of service parameter configured for the RAN. For example, the SMF network element sends second configuration information to the RAN, and the RAN receives the second configuration information from the SMF network element, where the second configuration information includes an updated quality of service parameter of the first quality of service flow.

It may be understood that, in the procedure in FIG. 2, the first configuration information and the first indication information may be directly transmitted between the RAN and the SMF network element, or the first configuration information and the first indication information may be transmitted between the RAN and the SMF network element via an AMF network element.

It may be understood that the solutions in embodiments of this application may be applied to an uplink communication process. For example, if the RAN supports the PDU set-based quality of service parameter of the first quality of service flow configured by the SMF network element, the terminal may perform uplink data transmission with the RAN in a unit of the PDU set. It may be understood that the PDU set is transmitted over the first quality of service flow. Alternatively, if the RAN does not support the PDU set-based quality of service parameter of the first quality of service flow configured by the SMF network element, the SMF network element may update the quality of service parameter of the first quality of service flow based on the second configuration information, and the terminal sends uplink data to the RAN based on the updated quality of service parameter.

FIG. 3 is a schematic flowchart according to an embodiment of this application. The schematic flowchart of FIG. 3 may be a specific application scenario of the schematic flowchart of FIG. 2. In addition to the application scenario shown in FIG. 3, the schematic flowchart of FIG. 2 may also be applied to another scenario. As shown in FIG. 3, the following steps are included.

Step 300: A terminal establishes a radio resource control (radio resource control, RRC) connection with a RAN.

Step 310: An AF network element sends a first message to a NEF network element, and the NEF network element receives the first message from the AF network element.

For example, the first message may be a quality of service create request (QoS create request), and the first message is used to request to create a first quality of service flow. The first message includes a protocol description (protocol description) and/or a quality of service parameter of a PDU set.

Optionally, step 320: The NEF network element performs authentication on the first message sent by the AF network element.

Step 330: The NEF network element sends a second message to a PCF network element, and the PCF network element receives the second message from the NEF network element.

For example, the second message may be a policy authorization create request (policy authorization create request), and the second message includes a protocol description and/or a quality of service parameter of a PDU set. In a possible implementation, when receiving the second message, the PCF network element generates a policy and charging control (policy and charging control, PCC) rule based on the protocol description and the quality of service parameter of the PDU set that are included in the second message, where the PCC rule includes information indicating the quality of service parameter of the PDU set and/or the protocol description.

Step 340: The PCF network element sends a third message to the NEF network element, and the NEF network element receives the third message from the PCF network element.

For example, the third message may be a response to the second message. For example, the third message may be a policy authorization create response (policy authorization create response).

Step 350: The NEF network element sends a fourth message to the AF network element, and the AF network element receives the fourth message from the NEF network element.

For example, the fourth message may be a response to the first message. For example, the fourth message may be a quality of service create response (QoS create response).

Optionally, step 340 and step 350 may be considered as that the PCF network element initiates a response to the request (a first request) of the AF network element.

Step 360: The PCF network element sends a fifth message to an SMF network element, and the SMF network element receives the fifth message from the PCF network element.

For example, the fifth message may be session management policy association establishment (SM policy association establishment, where SM stands for session management). In a possible implementation, the fifth message includes the PCC rule. For example, when receiving the fifth message, the SMF network element obtains the PCC rule from the fifth message, and further obtains a quality of service parameter of a PDU set and a protocol description from the PCC rule. The SMF network element generates a quality of service profile (QoS profile) based on the quality of service parameter of the PDU set. The quality of service profile includes the quality of service parameter of the PDU set. In step 360, a sixth message sent by the SMF network element to the RAN includes the quality of service profile.

Further, the SMF network element obtains the PCC rule from the fifth message, and generates a quality of service rule (QoS rule) based on the PCC rule. Further, the SMF network element obtains the protocol description from the PCC rule. A seventh message sent by the SMF network element to the terminal includes a quality of service rule and a protocol description.

Step 370: The SMF network element sends the sixth message to the RAN, and the RAN receives the sixth message from the SMF network element.

It may be understood that the SMF network element may directly send the sixth message to the RAN, or the SMF network element may send the sixth message to the RAN via an AMF network element.

For example, the sixth message includes the quality of service profile. In a possible implementation, a process of step 370 may be described as follows: The SMF network element sends first configuration information to the RAN, and the RAN receives the first configuration information from the SMF network element. For example, the first configuration information may be the quality of service profile, the quality of service profile may be a quality of service profile of the first quality of service flow, and the quality of service profile of the first quality of service flow is used to configure a first quality of service flow-based quality of service parameter.

Step 380: The SMF network element sends the seventh message to the terminal, and the terminal receives the seventh message from the SMF network element.

For example, the seventh message may be an SM message, and the seventh message includes the quality of service rule (QoS rule) and/or the protocol description.

Step 390: The terminal exchanges an eighth message with the RAN.

For example, an access network-specific resource set up (AN-specific resource set up) process may be performed between the terminal and the RAN. In this process, the terminal may send a message to the RAN, or the RAN may send a message to the terminal. In this embodiment of this application, the message sent by the terminal to the RAN may be referred to as the eighth message.

Step 3010: The RAN sends a ninth message to the SMF network element, and the SMF network element receives the ninth message from the RAN.

In a possible implementation, the ninth message may be a response to the sixth message. For example, the ninth message may be an N2 SM message response. The ninth message includes first indication information. The first indication information indicates that a quality of service parameter configured by the SMF network element is supported, for example, the quality of service profile configured by the SMF network element in step 370 is supported. Alternatively, the first indication information indicates that a quality of service parameter configured by the SMF network element is not supported. For example, the quality of service profile configured by the SMF network element in step 370 is not supported.

In a possible implementation, the RAN may determine the first indication information based on a quality of service handling capability of the RAN for a PDU set and a handling capability of the terminal for a PDU set. For example, when the RAN supports PDU set-based quality of service handling and the terminal supports handling of the PDU set, the first indication information indicates the support for the PDU set-based quality of service parameter of the first quality of service flow configured by the SMF network element; or when the RAN does not support quality of service handling of the PDU set and/or the terminal does not support handling of the PDU set, the first indication information indicates the non-support for the PDU set-based quality of service parameter of the first quality of service flow configured by the SMF network element.

It may be understood that when the RAN supports the quality of service profile configured by the SMF network element in step 370, it may be considered that the RAN supports the PDU set-based quality of service handling. Alternatively, when the RAN does not support the quality of service profile configured by the SMF network element in step 370, it is considered that the RAN does not support the quality of service handling of the PDU set.

Optionally, the terminal may report the handling capability of the terminal for the PDU set to the RAN. For example, the terminal sends second indication information to the RAN, and the RAN receives the second indication information from the terminal, where the second indication information indicates the handling capability of the terminal for the PDU set. For example, in a process in which the terminal establishes the RRC connection with the RAN, the terminal reports the second indication information to the RAN. For example, in step 300, the terminal sends an RRC message to the RAN, where the RRC message includes the second indication information that indicates the handling capability of the terminal for the PDU set. Alternatively, in step 390, the terminal reports the second indication information to the RAN. For example, the eighth message in step 390 includes the second indication information. Optionally, the handling capability of the terminal for the PDU set includes a capability of the terminal to identify the PDU set and/or a capability of the terminal to discard packets based on the PDU set. The capability of the terminal to identify the PDU set and the capability of the terminal to discard packets based on the PDU set may be reported by the terminal to the RAN in one message. Alternatively, the terminal may separately report the two capabilities of the terminal to the RAN in different messages. In a possible implementation, the terminal may report the capability of the terminal to discard packets based on the PDU set to the RAN in the RRC message in step 300. For example, the RRC message in step 300 includes indication information that indicates the capability of the terminal to discard packets based on the PDU set. The terminal may report, to the RAN in the eighth message in step 390, the capability of the terminal to identify the PDU set. For example, the eighth message in step 390 includes indication information that indicates the capability of the terminal to identify the PDU set.

It may be understood that, for reporting of the capability of the terminal to identify the PDU set: When the terminal "supports" identification of the PDU set, the terminal may report, to the RAN, indication information that indicates that the identification of the PDU set is "supported". Alternatively, when the terminal "does not support" identification of the PDU set, the terminal may not report information to the RAN anymore. In other words, when the RAN does not receive the indication information that indicates that the terminal "supports" the identification of the PUD set, the RAN may consider by default that the terminal "does not support" the identification of the PDU set. Alternatively, the terminal may report, to the RAN, indication information that indicates that identification of the PDU set is "not supported". Similarly, for the capability of the terminal to discard packets based on the PDU set, when the terminal "supports" PDU set-based packet discard, the terminal may report, to the RAN, that the PDU set-based packet discard is "supported". Alternatively, when the terminal "does not support" PDU set-based packet discard, the terminal may not report information to the RAN anymore. When the RAN does not receive a report that PDU set-based packet discard is "supported" from the terminal, the RAN may consider by default that the terminal "does not support" the PDU set-based packet discard. Alternatively, the terminal may report, to the RAN, that PDU set-based packet discard is "not supported".

In a possible implementation, the RAN may determine the first indication information based on the capability of the terminal to identify the PDU set and/or the capability of the terminal to discard packets based on the PDU set, and the quality of service handling capability of the RAN for the PDU set. For example, when the RAN supports the quality of service handling of the PDU set, and when the terminal does not support the identification of the PDU set, the first indication information indicates the non-support for the PDU set-based quality of service parameter of the first quality of service flow configured by the SMF network element. Alternatively, when the terminal does not support the PDU set-based packet discard, the first indication information indicates the non-support for the PDU set-based quality of service parameter of the first quality of service flow configured by the SMF network element. Alternatively, when the terminal supports the identification of the PDU set, and the terminal supports packet discard of the PDU set, the first indication information indicates the support for the PDU set-based quality of service parameter of the first quality of service flow configured by the SMF network element. Alternatively, when the RAN does not support the quality of service handling of the PDU set, the first indication information indicates the non-support for the PDU set-based quality of service parameter of the first quality of service flow configured by the SMF network element.

Optionally, when the first indication information indicates the non-support for the PDU set-based quality of service parameter of the first quality of service flow configured by the SMF network element, the terminal may further report a reason why the quality of service parameter is not supported to the RAN. For example, the reason may be that the terminal does not support handling of the PDU set. Further, that the terminal does not support the handling of the PDU set may include: The terminal does not support the identification of the PDU set and/or the terminal does not support the PDU set-based packet discard. Alternatively, the reason may be that the RAN does not support the quality of service handling of the PDU set. In a possible implementation, the terminal may send third indication information to the SMF network element, where the third indication information indicates a reason for the non-support for the PDU set-based quality of service parameter of the first quality of service flow configured by the SMF network element. Optionally, the ninth message in step 3010 further includes the third indication information in addition to the first indication information.

Step 3011: The SMF network element sends a tenth message to the AF network element, and the AF network element receives the tenth message from the SMF network element.

It may be understood that the SMF network element may directly send the tenth message to the AF network element, or the SMF network element may send the tenth message to the AF network element via the PCF network element and the NEF network element.

In a possible implementation, when receiving the ninth message in step 3010, the SMF network element may obtain the first indication information from the ninth message. The SMF network element generates the tenth message based on the first indication information. In step 3011, the tenth message sent by the SMF network element to the AF network element includes the first indication information. When receiving the tenth message, the AF network element may obtain the first indication information from the tenth message. Optionally, when the first indication information indicates that the RAN does not support a quality of service parameter of a data flow (for example, the first quality of service flow) configured by the SMF network element, the AF network element may trigger updating of the quality of service parameter of the data flow. For example, the AF network element modifies the quality of service parameter of the first quality of service flow. For example, the AF network element updates the quality of service parameter of the first quality of service flow for the PDU set to a legacy quality of service parameter (legacy QoS parameter). For example, the legacy quality of service parameter may be a quality of service parameter for a quality of service flow or the like. Alternatively, the AF network element may modify the parameter of the first quality of service flow based on the reported reason for "non-support". For example, the reported reason for "non-support" is that the terminal does not support the PDU set-based packet discard. In this case, the quality of service parameter of the PDU set configured in step 310 may not include "a parameter related to the PDU set-based packet discard". Alternatively, the reported reason for "non-support" is that the terminal does not support the identification of the PDU set. In this case, the quality of service parameter of the PDU set configured in step 310 may be updated to a legacy quality of service parameter or the like.

Optionally, the procedure shown in FIG. 3 further includes the following steps.

Step 3012: The AF network element sends an eleventh message to the SMF network element, and the SMF network element receives the eleventh message from the AF network element.

It may be understood that the AF network element may directly send the eleventh message to the SMF network element, or the AF network element may send the eleventh message to the SMF network element via the NEF network element and the PCF network element.

For example, a name of the eleventh message may be a quality of service update request (QoS update request), and the eleventh message includes an updated quality of service parameter of the first quality of service flow, which may be referred to as an updated quality of service parameter for short. Optionally, the eleventh message further includes a protocol description. It may be understood that if the updated quality of service parameter of the first quality of service flow is based on the PDU set, the eleventh message further includes the protocol description related to the PDU set. The protocol description is used by the terminal to identify a PDU set in uplink transmission. Alternatively, if the updated quality of service parameter of the first quality of service flow is based on a PDU, the eleventh message may not include information such as the protocol description anymore.

In a possible implementation, when receiving the eleventh message from the AF network element, the SMF network element obtains the updated quality of service parameter of the first quality of service flow from the eleventh message. The SMF network element generates a twelfth message based on the updated quality of service parameter of the first quality of service flow. For example, the twelfth message includes the updated quality of service parameter of the first quality of service flow.

Step 3013: The SMF network element sends the twelfth message to the RAN, and the RAN receives the twelfth message from the SMF network element.

It may be understood that the SMF network element may directly send the twelfth message to the RAN, or the SMF network element may send the twelfth message to the RAN via the AMF network element.

For example, the twelfth message includes the updated quality of service parameter of the first quality of service flow. In a description, a process of step 3013 is described as follows: The SMF network element sends second configuration information to the RAN, and the RAN receives the second configuration information from the SMF network element, where the second configuration information includes the updated quality of service parameter of the first quality of service flow. In a possible implementation, the second configuration information may be the twelfth message in step 3013, and the twelfth message or the second configuration information includes the updated quality of service parameter.

Step 3014: The SMF network element sends a thirteenth message to the terminal, and the terminal receives the thirteenth message from the SMF network element.

It may be understood that the SMF network element may directly send the thirteenth message to the terminal, or the SMF network element may send the thirteenth message to the terminal via the AMF network element and the RAN.

For example, a name of the thirteenth message may be N2 SM message update (update). In a possible implementation, when receiving the eleventh message in step 3012, the SMF network element obtains the updated quality of service parameter of the first quality of service flow from the eleventh message; and the SMF network element generates an updated quality of service rule (QoS rule) based on the updated quality of service parameter of the first quality of service flow. The thirteenth message sent by the SMF network element to the terminal includes the updated quality of service rule. Further, if the updated quality of service rule is associated with the PDU set, which is also described as that the updated quality of service rule is based on the PDU set, the thirteenth message may further include a protocol description.

In a possible implementation, in the procedure in FIG. 3, if the first indication information reported by the RAN indicates the support for the quality of service parameter of the first quality of service flow configured by the SMF network element, the terminal may perform uplink transmission with the RAN based on the quality of service rule and the protocol description that are configured in the seventh message in step 380. For example, the terminal may send uplink data to the RAN based on a requirement of the quality of service rule. Specifically, in a process in which the terminal sends the uplink data, the terminal may identify the PDU set based on the protocol description configured in step 380. Further, the terminal may discard packets based on a packet discard capability supported by the terminal. For a specific packet discard capability and a packet discard process, refer to the following descriptions. Alternatively, if the first indication information reported by the RAN indicates the non-support for the quality of service parameter of the first quality of service flow configured by the SMF network element, the terminal may perform uplink communication with the RAN based on the updated quality of service rule configured by the SMF network element in step 3014.

It may be understood that in the descriptions of FIG. 3, the support for the PDU set-based quality of service parameter of the first quality of service flow configured by the SMF network element may be replaced with support for creation of the first quality of service flow; or the non-support for the PDU set-based quality of service parameter of the first quality of service flow configured by the SMF network element may be replaced with non-support for creation of the first quality of service flow. It may be understood that if the first indication information reported by the RAN in the ninth message in step 3010 indicates that the creation of the first quality of service flow is not supported, after step 3011, the procedure shown in FIG. 3 may end, and subsequent step 3012 to step 3014 may not be performed.

In a possible implementation, in a process in which the RAN determines the first indication information, the RAN may determine the first indication information based on the quality of service handling capability of the RAN for the PDU set, the handling capability of the terminal for the PDU set, and the PDU set-based quality of service parameter of the first quality of service flow.

Optionally, the PDU set-based quality of service parameter of the first quality of service flow is configured by the SMF network element for the RAN in step 370. The PDU set-based quality of service parameter of the first quality of service flow may be included in a profile of the first quality of service flow. The profile of the first quality of service flow includes the quality of service parameter of the PDU set. The quality of service parameter of the PDU set may include a parameter related to the PDU set. For example, the quality of service parameter of the PDU set includes PSIHI, and the PSIHI is a parameter of PDU set integrity-based transmission.

In a possible implementation, when the quality of service parameter of the PDU set configured by the SMF network element includes a parameter of integrity or partial transmission of the PDU set, it indicates that when the terminal sends the PDU set to the RAN over a corresponding quality of service flow, the terminal needs to perform integrity or partial transmission on the PDU set based on the related parameter. Alternatively, when the quality of service parameter of the PDU set configured by the SMF network element does not include a related parameter of integrity or partial transmission, it indicates that when the terminal sends the PDU set to the RAN over a corresponding quality of service flow, the terminal does not need to perform integrity or partial transmission on the PDU set based on a requirement of the related parameter. An example is given below.

When the quality of service parameter of the PDU set configured by the SMF network element does not include the parameter related to integrity or partial transmission of the PDU set, when the terminal supports the identification of the PDU set, the RAN may determine the first indication information that indicates "support". Integrity packet discard of the PDU set is used as an example. The PDU set-based quality of service parameter of the first quality of service flow configured by the SMF network element for the RAN does not include the PSIHI. The RAN may report, to the SMF network element based on that the terminal supports the identification of the PDU set, but optionally, the terminal does not support the integrity packet discard of the PDU set, the first indication information that indicates "support". Alternatively,
when the quality of service parameter of the PDU set configured by the SMF network element includes the parameter related to integrity or partial transmission, when the terminal supports the identification of the PDU set, and the terminal supports the PDU set-based packet discard, the RAN may determine the first indication information that indicates "support"; or when the terminal does not support the identification of the PDU set and/or the terminal does not support the PDU set-based packet discard, the RAN may determine the first indication information that indicates "non-support". Integrity packet discard of a PDU set is used as an example. The PDU set-based quality of service parameter of the first quality of service flow configured by the SMF network element for the RAN includes the PSIHI, but the terminal does not support the integrity packet discard of the PDU set. In this case, the first indication information reported by the RAN to the SMF network element may be "not supported".

The following describes the capability of the terminal to discard packets based on the PDU set by using examples. It may be understood that, in addition to the packet discard capability described in this embodiment of this application, another packet discard capability is also applicable to the solution in embodiments of this application. Applying another packet discard capability to the solution in embodiments of this application also falls within the protection scope of embodiments of this application.

In a possible implementation, the capability of the terminal to discard packets based on the PDU set in embodiments of this application includes at least one of the following:
a capability of the terminal to discard packets based on PDU set integrity, a capability of the terminal to discard packets based on PDU set importance (PDU set importance, PSI), a capability of the terminal to discard packets based on forward error correction (forward error correction, FEC) of the PDU set, or a capability of the terminal to discard packets based on error concealment (error concealment) of the PDU set.

### 1. Capability to discard packets based on PDU set integrity

For example, one PDU set corresponds to one timer, and the timer may be referred to as a packet discard timer (discard timer). In uplink transmission, when starting to transmit a data packet of a PDU set, the terminal may start a timer corresponding to the PDU set. For a PDU set, if uplink transmission of the PDU set is not completed when running of a timer corresponding to the PDU set ends, it is considered that transmission of the PDU set times out, and the entire PDU set is discarded.

In a possible implementation, the capability of the terminal to discard packets based on PDU set integrity may be referred to as a protocol data unit-based discard-R18 (pdu-based discard-R18) capability. In a possible implementation, when the terminal supports PDU set integrity-based packet discard, the terminal may report indication information corresponding to the pdu-based discard-R18 capability to the RAN; or when the terminal does not support PDU set integrity-based packet discard, the terminal may not report such information to the RAN. For the RAN, if the indication information, corresponding to the pdu-based discard-R18 capability, reported by the terminal is not received, it may be considered by default that the terminal does not support the PDU set integrity-based packet discard.

### 2. Capability to discard packets based on PDU set importance

For example, based on importance information of a PDU data packet, packet discard timers with different timing durations may be set for PDU sets of different importance degrees. For example, a timing duration of a packet discard timer specified for a PDU set of higher importance is longer. A timing duration of a packet discard timer specified for a PDU set of lower importance is shorter. Optionally, the timing duration of the timer may also be referred to as a running duration of the timer.

For a PDU set, when the terminal sends the PDU set to the RAN, a packet discard timer corresponding to the PDU set may be started. If the terminal does not complete transmission of the PDU set when running of the packet discard timer ends, the PDU set is discarded and is not transmitted anymore.

In a possible implementation, the capability of the terminal to discard packets based on PDU set importance may be referred to as a PDU set importance-based discard-R18 (psi-based discard-r18) capability. In a possible implementation, when the terminal supports PDU set importance-based packet discard, the terminal reports indication information corresponding to psi-based discard-r18 to the RAN; or when the terminal does not support PDU set importance-based packet discard, the terminal does not report such information to the RAN anymore. For the RAN, if the indication information, corresponding to the psi-based discard-r18 capability, reported by the terminal is not received, it may be considered by default that the terminal does not support the PDU set importance-based packet discard.

### 3. Capability to discard packets based on FEC of the PDU set

FEC means that a transmit end adds a redundancy correction codeword to a transmitted codeword. Under a specific condition, a receive end may automatically correct a transmitted erroneous codeword by using the redundancy correction codeword, to reduce an error rate of a received codeword.

For example, when an FEC content ratio (FEC content ratio) of a PDU set is equal to 75, when transmission of 75% of PDU data packets in the PDU set is completed, it is considered that PDU set transmission is completed, and the remaining 25% of PDU data packets may be discarded and are not transmitted anymore.

In a possible implementation, packet discard timers of PDU data packets in the PDU set may be set based on the FEC content ratio of the PDU set. The foregoing example is still used. A packet discard timer with a longer timing duration may be set for the 75% of PDU data packets in the PDU set. A packet discard timer with a shorter timing duration is set for the remaining 25% of PDU data packets in the PDU set.

In a possible implementation, packet discard timers of PDU data packets in the PDU set may be set based on different types of data packets in the FEC. The foregoing example is still used. A packet discard timer with a longer timing duration may be set for a key data packet in the PDU set. A packet discard timer with a shorter timing duration is set for a protection data packet in the PDU set. The key data packet in the PDU set is a data packet that forms the PDU set, and the protection data packet in the PDU set is an FEC protection packet (protection packet). In a possible manner, the protection data packet may be considered as a redundant data packet of the FEC.

In a possible implementation, the capability of the terminal to discard packets based on FEC of the PDU set may be referred to as a forward error correction-based discard (FEC-based discard) capability. If the terminal reports indication information corresponding to the FEC-based discard capability to the RAN, it indicates that the terminal supports PDU set FEC-based packet discard; or if the terminal does not report indication information corresponding to the FEC-based discard capability to the RAN, it indicates that the terminal does not support PDU set FEC-based packet discard.

Optionally, in the foregoing procedure in FIG. 3, when the PDU set FEC-based packet discard of the terminal is applied, step 310 may further include FEC indication information (FEC indication information). Further, the messages in step 330 to step 370 may also include the FEC indication information. For example, the FEC indication information may be an FEC enable indication (FEC enable indication) or FEC content ratio information.

In a possible implementation, when the terminal obtains the FEC indication information from the seventh message, for example, the FEC enable indication or an EFC content ratio, the terminal reports the capability of the terminal to discard packets based on FEC of the PDU set to the RAN in the eighth message in step 390. The FEC packet discard capability of the PDU set may be at a quality of service flow (QoS flow) granularity. To be specific, for each quality of service flow, the terminal reports, to the RAN, an FEC packet discard capability, of the terminal, corresponding to the service quality flow. Alternatively, the FEC packet discard capability of the PDU set may be at a PDU set granularity. To be specific, for each PDU set, the terminal reports, to the RAN, an FEC packet discard capability, of the terminal, corresponding to the quality of service flow.

Optionally, in step 300 or step 390 in the procedure in FIG. 3, the terminal may further report an FEC capability of the terminal to the RAN. For example, the FEC capability of the terminal may be that the terminal supports FEC coding, or the terminal does not support FEC coding. When determining the first indication information, the RAN may consider the FEC capability of the terminal.

When the terminal does not support FEC coding, the RAN determines the first indication information that indicates "non-support". Alternatively, when the terminal supports FEC coding, the terminal supports identification of a PDU, and the terminal supports the PDU set FEC-based packet discard, the RAN determines the first indication information that indicates "support".

Further, when the first indication information indicates "non-support", in addition to the descriptions in the procedure in FIG. 3, the reason for "non-support" may further include: The terminal does not support FEC coding. In a possible implementation, that the terminal supports FEC coding indicates that the terminal supports constructing an FEC data packet in an FEC manner.

### 4. Capability to discard packets based on error concealment of the PDU set

For a PDU set, a transmit end may send a PDU data packet to the RAN based on a serial number (serial number, SN) corresponding to the PDU data packet. For example, the transmit end may send PDU data packets to a receive end in ascending order of SNs. For example, if one PDU set includes 10 PDU data packets, and SNs of the PDU data packets are respectively 0 to 9, the transmit end may send the 10 PDU data packets to the receive end in an order of SNs from 0 to 9.

When the terminal supports PDU set error concealment-based packet discard, and when one or more PDU data packets are lost, subsequent PDU data packets in the PDU set are not transmitted anymore. For example, when a PDU data packet whose SN is equal to 2 is lost, PDU data packets whose SNs are equal to 3 to 9 in the PDU set are not transmitted anymore.

In a possible implementation, a packet discard timer may be configured for a PDU set. In an uplink transmission scenario, when starting transmission of a PDU set, the terminal starts a corresponding packet discard timer. During running of the packet discard timer, the terminal sequentially sends PDU data packets to the RAN based on values of SNs. When the running of the packet discard timer ends, remaining PDU data packets in the PDU set are discarded and are not transmitted anymore. For example, one PDU set includes 100 PDU data packets. During running of the timer, the terminal successfully transmits 80 PDU data packets with SN 0 to the SN 79 to the RAN in ascending order of SNs. The remaining 20 PDU data packets in the PDU set are discarded, and are not transmitted anymore.

In a possible implementation, the capability to discard packets based on error concealment of the PDU set reported by the terminal to the RAN may be specifically: PDU set error concealment-based indication information, or indication information corresponding to error concealment-based discard (error concealment-based discard). The indication information may be represented by using one bit. For example, when the indication information is a first value, it indicates that the terminal supports PDU set error concealment-based packet discard. Alternatively, when the indication information is a second value, it indicates that the terminal does not support PDU set error concealment-based packet discard. Certainly, when the terminal does not support PDU set error concealment-based packet discard, the terminal may not report information to the RAN. This is not limited.

Optionally, in the foregoing procedure in FIG. 3, when the PDU set error concealment-based packet discard of the terminal is applied, step 310 may further include error concealment indication information, where for example, the error concealment indication information may be an error concealment enable indication (error concealment enable indication). Similarly, the messages in step 330 to step 370 may also include the error concealment indication information.

It may be understood that, in the foregoing capability of the terminal to discard packets based on the PDU set, a timer may need to be applied, and corresponding packet discard is implemented by using the timer. The timer may be predefined, for example, specified in a protocol, or configured by the RAN for the terminal. For example, the RAN sends third configuration information to the terminal, and the terminal receives the third configuration information from the RAN. The third configuration information is used to configure, for the terminal, a timer for packet discard based on the PDU set. For example, in the foregoing descriptions, the terminal may report the second indication information to the RAN. The second indication information indicates the handling capability of the terminal for the PDU set. For example, the capability includes a capability of the terminal to identify the PDU set and/or a capability of the terminal to discard packets based on the PDU set. When the RAN receives the second indication information, if the second indication information indicates that the terminal supports handling of the PDU set, the RAN configures a corresponding timer for the terminal. More specifically, when the RAN receives, from the terminal, a capability that the PDU set-based packet discard is supported, the RAN configures the corresponding timer for the terminal. For example, the terminal may report the capability of the terminal to discard packets based on the PDU set to the RAN in the eighth message in step 390 in the foregoing procedure in FIG. 3. When the terminal reports, in the eighth message, that the packet discard of the PDU set is supported, the RAN may configure a corresponding timer for the terminal. In a possible implementation, the RAN may configure a corresponding timer for the terminal by using an access network-specific resource setup procedure corresponding to the eighth message. Certainly, names of timers corresponding to different packet discard capabilities may be different. For example, a name of a timer corresponding to integrity packet discard is an integrity-based (PSIHI_based) timer. A name of a timer corresponding to importance packet discard may be an importance-based (PSI_based) timer. A name of a timer corresponding to FEC packet discard is FEC-based (FEC based) timer. A name of a timer corresponding to error concealment is error concealment-based (error concealment based) timer.

Transmission scheduling of the PDU set may be alternatively performed in a manner other than configuring the timer. In a possible implementation, a radio link control (radio link control, RLC) layer status report at a PDU set granularity may be sent between the RAN and the terminal, to indicate a transmission status of the PDU set, for example, a transmission success status or a transmission failure status of a data packet in the PDU set. The terminal determines, from the RLC layer status report at the PDU set granularity, whether transmission of the PDU set meets an integrity transmission requirement/a partial transmission requirement. If the corresponding transmission requirement is not met, in a possible manner, the terminal retransmits a corresponding data packet in the PDU set.

It may be understood that, in the foregoing descriptions, "the SMF network element sends the first configuration information to the access network device, where the first configuration information includes the protocol data unit PDU set-based quality of service parameter of the first quality of service flow; the access network device determines the first indication information based on the quality of service handling capability of the access network device for the PDU set and the handling capability of the terminal for the PDU set; and the access network device sends the first indication information to the SMF network element" is used as an example. An embodiment of this application further provides a solution, including: An SMF network element determines first indication information based on a quality of service handling capability of an access network device for a PDU set and a handling capability of a terminal for a PDU set. For the first indication information, refer to the foregoing descriptions.

According to the foregoing design, in uplink transmission, the RAN may determine, based on the quality of service handling capability of the RAN for the PDU set and the handling capability of the terminal for the PDU set, whether the quality of service parameter of the PDU set configured by the SMF network element is supported, so that the quality of service parameter of the PDU set configured by the SMF network element can meet uplink transmission between the terminal and the RAN.

It may be understood that, in embodiments of this application:
1. The focus is on describing differences between different procedures, and mutual reference may be made to descriptions of the different procedures.
2. In each procedure, a sequence of different steps is not limited. In addition, each procedure may include fewer steps or more steps than the schematic flowchart or the text description.
3. In the procedures in FIG. 2 and FIG. 3, an example in which the SMF network element, the access network device, the terminal, and the like are execution bodies is used for description. It may be understood that, in each procedure, a function of the terminal may be implemented by the terminal, or may be implemented by a module (for example, a chip or a circuit) in the terminal. A function of the access network device may be implemented by the access network device, or may be implemented by a module (for example, a chip or a circuit) in the access network device, or may be implemented by a logical node (for example, a CU, a DU, or an RU), a logical module, or software that can implement all or a part of the functions of the access network device. A function of the SMF network element may be implemented by the SMF network element, or may be implemented by a module (for example, a chip or a circuit) in the SMF network element.
4. In embodiments of this application, "(for example, the access network device) receives information from (for example, the SMF network element)" may be understood as that a source end of the information is the SMF network element, and a destination end of the information is the access network device. The access network device may directly or indirectly receive the information from the SMF network element. Necessary processing, for example, a format change, may be performed on the information when the information is sent between the source end and the destination end, but the destination end can understand valid information from the source end. Similar descriptions in this application may be construed in a similar manner, and details are not described herein again.

In the foregoing embodiments provided in this application, the methods provided in embodiments of this application are separately described from a perspective of interaction between the terminal, the access network device, and the SMF network element. To implement functions in the methods provided in embodiments of this application, the terminal, the access network device, the SMF network element, or the like may include a hardware structure and/or a software module, to implement the foregoing functions in a form of a hardware structure, a software module, or a combination of the hardware structure and the software module. Whether a function in the foregoing functions is performed by using the hardware structure, the software module, or the combination of the hardware structure and the software module depends on design constraints of particular applications of the technical solutions.

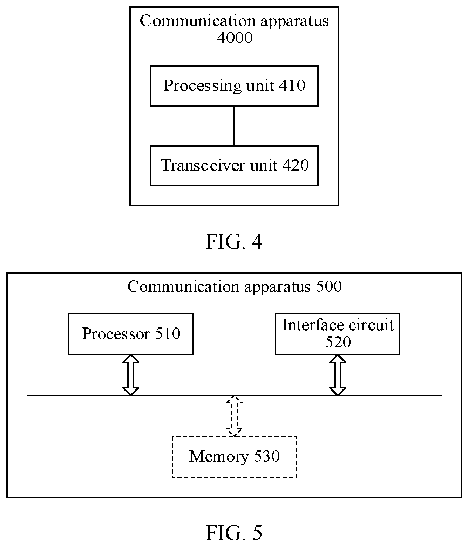

FIG. 4 and FIG. 5 are diagrams of structures of possible communication apparatuses according to an embodiment of this application. These communication apparatuses may implement one or more corresponding functions in the foregoing method embodiments, for example, a function implemented by the SMF network element, the access network device, or the like. Therefore, beneficial effects of the foregoing method embodiments may be implemented. In this embodiment of this application, the communication apparatus may be the access network device in the RAN 200 shown in FIG. 1, or the SMF network element in the core network 300, or a module (for example, a chip or a circuit) used in the access network device or the SMF network element.

As shown in FIG. 4, a communication apparatus 4000 includes a processing unit 410 and a transceiver unit 420. The communication apparatus 4000 is configured to implement a function of the access network device or the SMF network element in the method embodiment shown in FIG. 2 or FIG. 3.

Optionally, the transceiver unit 420 may also be referred to as an output unit, an interface unit, a communication unit, or the like. In a possible implementation, the transceiver unit 420 includes at least one of a sending unit or a receiving unit. The sending unit and the receiving unit may be integrated together, or may be two independent units, or the like.

When the communication apparatus 4000 is configured to implement a function of the access network device in FIG. 2 or FIG. 3, specifically:

The transceiver unit 420 is configured to receive first configuration information from a session management function network element, where the first configuration information includes a protocol data unit PDU set-based quality of service parameter of a first quality of service flow. The processing unit 410 is configured to determine first indication information based on a quality of service handling capability of an access network device for a PDU set and a handling capability of a terminal for a PDU set. The transceiver unit 420 is further configured to send the first indication information to the session management function network element, where the first indication information indicates support or non-support for the PDU set-based quality of service parameter of the first quality of service flow configured by the session management function network element.

In a possible implementation, the support for the PDU set-based quality of service parameter of the first quality of service flow configured by the session management function network element includes: creation of the first quality of service flow is supported; or the non-support for the PDU set-based quality of service parameter of the first quality of service flow configured by the session management function network element includes: creation of the first quality of service flow is not supported.

In a possible implementation, when the access network device supports the PDU set-based quality of service handling, and the terminal supports handling of the PDU set, the first indication information indicates the support for the PDU set-based quality of service parameter of the first quality of service flow configured by the session management function network element; or when the access network device does not support quality of service handling of the PDU set, and/or the terminal does not support handling of the PDU set, the first indication information indicates the non-support for the PDU set-based quality of service parameter of the first quality of service flow configured by the session management function network element.

In a possible implementation, the handling capability of the terminal for the PDU set includes a capability of the terminal to identify the PDU set and/or a capability of the terminal to discard packets based on the PDU set.

In a possible implementation, when determining the first indication information based on the quality of service handling capability of the access network device for the PDU set and the handling capability of the terminal for the PDU set, the processing unit 410 is specifically configured to determine the first indication information based on the capability of the terminal to identify the PDU set and/or the capability of the terminal to discard packets based on the PDU set and the quality of service handling capability of the access network device for the PDU set.

In a possible implementation, when the terminal does not support identification of the PDU set, the first indication information indicates the non-support for the PDU set-based quality of service parameter of the first quality of service flow configured by the session management function network element.

In a possible implementation, when the terminal supports identification of the PDU set, and the terminal supports packet discard of the PDU set, the first indication information indicates the support for the PDU set-based quality of service parameter of the first quality of service flow configured by the session management function network element.

In a possible implementation, when determining the first indication information based on the quality of service handling capability of the access network device for the PDU set and the handling capability of the terminal for the PDU set, the processing unit 410 is specifically configured to determine the first indication information based on the quality of service handling capability of the access network device for the PDU set, the handling capability of the terminal for the PDU set, and the PDU set-based quality of service parameter of the first quality of service flow.

In a possible implementation, the capability of the terminal to discard packets based on the PDU set includes at least one of the following: a capability of the terminal to discard packets based on PDU set integrity, a capability of the terminal to discard packets based on PDU set importance, a capability of the terminal to discard packets based on forward error correction FEC of the PDU set, or a capability of the terminal to discard packets based on error concealment of the PDU set.

In a possible implementation, the transceiver unit 420 is further configured to receive second indication information from the terminal, where the second indication information indicates the handling capability of the terminal for the PDU set.

In a possible implementation, when the first indication information indicates the non-support for the PDU set-based quality of service parameter of the first quality of service flow configured by the session management function network element, the transceiver unit 420 is further configured to send third indication information to the session management function network element, where the third indication information indicates a reason for the non-support for the PDU set-based quality of service parameter of the first quality of service flow configured by the session management function network element.

In a possible implementation, when the first indication information indicates the non-support for the PDU set-based quality of service parameter of the first quality of service flow configured by the session management function network element, the transceiver unit 420 is further configured to receive second configuration information from the session management function network element, where the second configuration information includes an updated quality of service parameter of the first quality of service flow.

In a possible implementation, when the first indication information indicates the support for the PDU set-based quality of service parameter of the first quality of service flow configured by the session management function network element, the transceiver unit 420 is further configured to send third configuration information to the terminal, where the third configuration information is used to configure, for the terminal, a timer for packet discard based on the PDU set.

When the communication apparatus 4000 is configured to implement a function of the SMF network element in FIG. 2 or FIG. 3, specifically: The processing unit 410 is configured to generate first configuration information. The transceiver unit 420 is configured to send the first configuration information to an access network device, where the first configuration information includes a protocol data unit PDU set-based quality of service parameter of a first quality of service flow. The transceiver unit 420 is further configured to receive first indication information from the access network device, where the first indication information indicates support or non-support for the PDU set-based quality of service parameter of the first quality of service flow configured by the session management function network element, and the first indication information is determined based on a quality of service handling capability of the access network device for a PDU set and a handling capability of a terminal for a PDU set.

In a possible implementation, the support for the PDU set-based quality of service parameter of the first quality of service flow configured by the session management function network element includes: creation of the first quality of service flow is supported; or the non-support for the PDU set-based quality of service parameter of the first quality of service flow configured by the session management function network element includes: creation of the first quality of service flow is not supported.

In a possible implementation, when the access network device supports PDU set-based quality of service handling, and the terminal supports handling of the PDU set, the first indication information indicates the support for the PDU set-based quality of service parameter of the first quality of service flow configured by the session management function network element; or when the access network device does not support quality of service handling of the PDU set, and/or the terminal does not support handling of the PDU set, the first indication information indicates the non-support for the PDU set-based quality of service parameter of the first quality of service flow configured by the session management function network element.

In a possible implementation, the handling capability of the terminal for the PDU set includes a capability of the terminal to identify the PDU set and/or a capability of the terminal to discard packets based on the PDU set.

In a possible implementation, that the first indication information is determined based on the quality of service handling capability of the access network device for the PDU set and the handling capability of the terminal for the PDU set includes: The first indication information is determined based on the capability of the terminal to identify the PDU set and/or the capability of the terminal to discard packets based on the PDU set and the quality of service handling capability of the access network device for the PDU set.

In a possible implementation, when the terminal does not support identification of the PDU set, the first indication information indicates the non-support for the PDU set-based quality of service parameter of the first quality of service flow configured by the session management function network element.

In a possible implementation, when the terminal supports identification of the PDU set, and the terminal supports packet discard of the PDU set, the first indication information indicates the support for the PDU set-based quality of service parameter of the first quality of service flow configured by the session management function network element.

In a possible implementation, that the first indication information is determined based on the quality of service handling capability of the access network device for the PDU set and the handling capability of the terminal for the PDU set includes: The first indication information is determined based on the quality of service handling capability of the access network device for the PDU set, the handling capability of the terminal for the PDU set, and the PDU set-based quality of service parameter of the first quality of service flow.

In a possible implementation, the capability of the terminal to discard packets based on the PDU set includes at least one of the following: a capability of the terminal to discard packets based on PDU set integrity, a capability of the terminal to discard packets based on PDU set importance, a capability of the terminal to discard packets based on forward error correction FEC of the PDU set, or a capability of the terminal to discard packets based on error concealment of the PDU set.

In a possible implementation, when the first indication information indicates the non-support for the PDU set-based quality of service parameter of the first quality of service flow configured by the session management function network element, the transceiver unit 420 is further configured to receive third indication information from the access network device, where the third indication information indicates a reason for the non-support for the PDU set-based quality of service parameter of the first quality of service flow configured by the session management function network element.

In a possible implementation, when the first indication information indicates the non-support for the PDU set-based quality of service parameter of the first quality of service flow configured by the session management function network element, the transceiver unit 420 is further configured to send second configuration information to the access network device, where the second configuration information includes an updated quality of service parameter of the first quality of service flow.

For more detailed descriptions of the processing unit 410 and the transceiver unit 420, refer to the descriptions of FIG. 2 or FIG. 3 in the foregoing method embodiments. Details are not described herein again.

It may be understood that, in embodiments of this application, division into the units is an example, and is merely a logical function division. In actual implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

As shown in FIG. 5, the communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530 configured to store instructions to be executed by the processor 510, store input data required for the processor 510 to run the instructions, or store data generated after the processor 510 runs the instructions.

When the communication apparatus 500 is configured to implement the method shown in FIG. 2 or FIG. 3, the processor 510 is configured to implement a function of the processing unit 410, and the interface circuit 520 is configured to implement a function of the transceiver unit 420.

When the communication apparatus is a chip used in an access network device, the chip implements a function of the access network device in the foregoing method embodiments. The chip receives, by using another module (for example, a radio frequency module or an antenna) in the access network device, information sent by an SMF network element to the access network device; or the chip sends information to another module (for example, a radio frequency module or an antenna) in the access network device, where the information is sent by the access network device to an SMF network element.

When the foregoing communication apparatus is a module used in the SMF network element, the module implements a function of the SMF network element in the method embodiments. The module receives information from another module (for example, a radio frequency module or an antenna) in the SMF network element, where the information is sent by the access network device to the SMF network element; or the module sends information to another module (for example, a radio frequency module or an antenna) in the SMF network element, where the information is sent by the SMF network element to the access network device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

In this embodiment of this application, the memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC.

An embodiment of this application further provides a communication apparatus. The communication apparatus includes a processor and a memory. The processor is coupled to the memory, and the processor is configured to implement a function of the access network device or the SMF network element in FIG. 2 or FIG. 3.

An embodiment of this application further provides a communication apparatus, including a processor. The processor is configured to implement a function of the access network device or the SMF network element in FIG. 2 or FIG. 3.

An embodiment of this application further provides a computer-readable storage medium. The computer-readable storage medium stores instructions, and the instructions may also be referred to as a computer program, computer program code, or the like. The instructions are run on a computer, to cause the computer to perform a function of the access network device or the SMF network element in FIG. 2 or FIG. 3 in the foregoing method embodiments.

An embodiment of this application further provides a computer program product, including a computer program or instructions. When the computer program or the instructions are run on a computer, the method of the access network device or the SMF network element in FIG. 2 or FIG. 3 is implemented.

An embodiment of this application further provides a chip. The chip includes a processor. The processor is coupled to a memory. The processor is configured to execute a computer program or instructions stored in the memory, so that a function of the access network device or the SMF network element in FIG. 2 or FIG. 3 is implemented.

An embodiment of this application further provides a communication system, including a first communication apparatus and a second communication apparatus. The first communication apparatus and the second communication apparatus may be separately configured to implement a function of the access network device or the SMF network element in FIG. 2 or FIG. 3. Further, a third communication apparatus is included, configured to implement a function of the terminal in FIG. 3.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and can be mutually referenced, and technical features in different embodiments can be combined to form new embodiments based on their inherent logical relationship.

## Claims

1. A communication method, comprising:
receiving first configuration information from a session management function network element, wherein the first configuration information comprises a protocol data unit PDU set-based quality of service parameter of a first quality of service flow;
determining first indication information based on a quality of service handling capability of an access network device for a PDU set and a handling capability of a terminal for a PDU set; and
sending the first indication information to the session management function network element, wherein the first indication information indicates support or non-support for the PDU set-based quality of service parameter of the first quality of service flow configured by the session management function network element.

2. The method according to claim 1, wherein
the support for the PDU set-based quality of service parameter of the first quality of service flow configured by the session management function network element comprises: creation of the first quality of service flow is supported; or
the non-support for the PDU set-based quality of service parameter of the first quality of service flow configured by the session management function network element comprises: creation of the first quality of service flow is not supported.

3. The method according to claim 1 or 2, wherein
when the access network device supports quality of service handling of the PDU set and the terminal supports handling of the PDU set, the first indication information indicates the support for the PDU set-based quality of service parameter of the first quality of service flow configured by the session management function network element; or
when the access network device does not support quality of service handling of the PDU set and/or the terminal does not support handling of the PDU set, the first indication information indicates the non-support for the PDU set-based quality of service parameter of the first quality of service flow configured by the session management function network element.

4. The method according to any one of claims 1 to 3, wherein the handling capability of the terminal for the PDU set comprises a capability of the terminal to identify the PDU set and/or a capability of the terminal to discard packets based on the PDU set.

5. The method according to claim 4, wherein the determining the first indication information based on the quality of service handling capability of the access network device for the PDU set and the handling capability of the terminal for the PDU set comprises:
determining the first indication information based on the capability of the terminal to identify the PDU set and/or the capability of the terminal to discard packets based on the PDU set and the quality of service handling capability of the access network device for the PDU set.

6. The method according to claim 5, wherein when the terminal does not support identification of the PDU set, the first indication information indicates the non-support for the PDU set-based quality of service parameter of the first quality of service flow configured by the session management function network element.

7. The method according to claim 5, wherein when the terminal supports identification of the PDU set, and the terminal supports PDU set-based packet discard, the first indication information indicates the support for the PDU set-based quality of service parameter of the first quality of service flow configured by the session management function network element.

8. The method according to any one of claims 1 to 7, wherein the determining the first indication information based on the quality of service handling capability of the access network device for the PDU set and the handling capability of the terminal for the PDU set comprises:
determining the first indication information based on the quality of service handling capability of the access network device for the PDU set, the handling capability of the terminal for the PDU set, and the PDU set-based quality of service parameter of the first quality of service flow.

9. The method according to any one of claims 4 to 8, wherein the capability of the terminal to discard packets based on the PDU set comprises at least one of the following: a capability of the terminal to discard packets based on PDU set integrity, a capability of the terminal to discard packets based on PDU set importance, a capability of the terminal to discard packets based on forward error correction FEC of the PDU set, or a capability of the terminal to discard packets based on error concealment of the PDU set.

10. The method according to any one of claims 1 to 9, further comprising:
receiving second indication information from the terminal, wherein the second indication information indicates the handling capability of the terminal for the PDU set.

11. The method according to any one of claims 1 to 10, wherein when the first indication information indicates the non-support for the PDU set-based quality of service parameter of the first quality of service flow configured by the session management function network element, the method further comprises:
sending third indication information to the session management function network element, wherein the third indication information indicates a reason for the non-support for the PDU set-based quality of service parameter of the first quality of service flow configured by the session management function network element.

12. The method according to any one of claims 1 to 11, wherein when the first indication information indicates the non-support for the PDU set-based quality of service parameter of the first quality of service flow configured by the session management function network element, the method further comprises:
receiving second configuration information from the session management function network element, wherein the second configuration information comprises an updated quality of service parameter of the first quality of service flow.

13. The method according to any one of claims 1 to 12, wherein when the first indication information indicates the support for the PDU set-based quality of service parameter of the first quality of service flow configured by the session management function network element, the method further comprises:
sending third configuration information to the terminal, wherein the third configuration information is used to configure, for the terminal, a timer for packet discard based on the PDU set.

14. A communication method, comprising:
sending first configuration information to an access network device, wherein the first configuration information comprises a protocol data unit PDU set-based quality of service parameter of a first quality of service flow; and
receiving first indication information from the access network device, wherein the first indication information indicates support or non-support for the PDU set-based quality of service parameter of the first quality of service flow configured by a session management function network element, and the first indication information is determined based on a quality of service handling capability of the access network device for a PDU set and a handling capability of a terminal for a PDU set.

15. The method according to claim 14, wherein
the support for the PDU set-based quality of service parameter of the first quality of service flow configured by the session management function network element comprises: creation of the first quality of service flow is supported; or
the non-support for the PDU set-based quality of service parameter of the first quality of service flow configured by the session management function network element comprises: creation of the first quality of service flow is not supported.

16. The method according to claim 14 or 15, wherein
when the access network device supports quality of service handling of the PDU set, and the terminal supports handling of the PDU set, the first indication information indicates the support for the PDU set-based quality of service parameter of the first quality of service flow configured by the session management function network element; or
when the access network device does not support quality of service handling of the PDU set, and/or the terminal does not support handling of the PDU set, the first indication information indicates the non-support for the PDU set-based quality of service parameter of the first quality of service flow configured by the session management function network element.

17. The method according to any one of claims 14 to 16, wherein the handling capability of the terminal for the PDU set comprises a capability of the terminal to identify the PDU set and/or a capability of the terminal to discard packets based on the PDU set.

18. The method according to claim 17, wherein that the first indication information is determined based on the quality of service handling capability of the access network device for the PDU set and the handling capability of the terminal for the PDU set comprises:
the first indication information is determined based on the capability of the terminal to identify the PDU set and/or the capability of the terminal to discard packets based on the PDU set and the quality of service handling capability of the access network device for the PDU set.

19. The method according to claim 18, wherein when the terminal does not support identification of the PDU set, the first indication information indicates the non-support for the PDU set-based quality of service parameter of the first quality of service flow configured by the session management function network element.

20. The method according to claim 18, wherein when the terminal supports identification of the PDU set, and the terminal supports PDU set-based packet discard, the first indication information indicates the support for the PDU set-based quality of service parameter of the first quality of service flow configured by the session management function network element.

21. The method according to any one of claims 14 to 20, wherein that the first indication information is determined based on the quality of service handling capability of the access network device for the PDU set and the handling capability of the terminal for the PDU set comprises:
the first indication information is determined based on the quality of service handling capability of the access network device for the PDU set, the handling capability of the terminal for the PDU set, and the PDU set-based quality of service parameter of the first quality of service flow.

22. The method according to any one of claims 17 to 21, wherein the capability of the terminal to discard packets based on the PDU set comprises at least one of the following: a capability of the terminal to discard packets based on PDU set integrity, a capability of the terminal to discard packets based on PDU set importance, a capability of the terminal to discard packets based on forward error correction FEC of the PDU set, or a capability of the terminal to discard packets based on error concealment of the PDU set.

23. The method according to any one of claims 14 to 22, wherein when the first indication information indicates the non-support for the PDU set-based quality of service parameter of the first quality of service flow configured by the session management function network element, the method further comprises:
receiving third indication information from the access network device, wherein the third indication information indicates a reason for the non-support for the PDU set-based quality of service parameter of the first quality of service flow configured by the session management function network element.

24. The method according to any one of claims 14 to 23, wherein when the first indication information indicates the non-support for the PDU set-based quality of service parameter of the first quality of service flow configured by the session management function network element, the method further comprises:
sending second configuration information to the access network device, wherein the second configuration information comprises an updated quality of service parameter of the first quality of service flow.

25. A communication apparatus, comprising a unit configured to implement the method according to any one of claims 1 to 13, or a unit configured to implement the method according to any one of claims 14 to 24.

26. A communication apparatus, comprising a processor and a memory, wherein the processor is coupled to the memory, and the processor is configured to implement the method according to any one of claims 1 to 13, or implement the method according to any one of claims 14 to 24.

27. A computer-readable storage medium, wherein the computer-readable storage medium stores instructions, and when the instructions are run on a computer, the computer is caused to perform the method according to any one of claims 1 to 13 or the method according to any one of claims 14 to 24.
